(19) Europäisches Patentamt
European Patent Office
Office européen des brevets

(11) EP 1 006 090 A1

(12) **EUROPEAN PATENT APPLICATION**

(43) Date of publication:
**07.06.2000 Bulletin 2000/23**

(51) Int. Cl.7: **C04B 35/117**, C04B 35/80, C04B 35/111, F16K 25/00

(21) Application number: **98309819.5**

(22) Date of filing: **01.12.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**Isuzu Ceramics Research Co., Ltd.**
**Fujisawa-shi, Kanagawa-ken, 252-0806 (JP)**

(72) Inventors:
- **Suzuki, Takayuki**
  **Fujisawa-shi, Kanagawa-ken 252-0815 (JP)**
- **Kita, Hideki**
  **Fujisawa-shi, Kanagawa-ken 251-0044 (JP)**
- **Unno, Yasuaki**
  **Fujisawa-shi, Kanagawa-ken 251-0051 (JP)**
- **Osumi, Kazuo**
  **Fujisawa-shi, Kanagawa-ken 251-0025 (JP)**
- **Isshiki, Tetsuya**
  **Yamato-shi, Kanagawa-ken 242-0024 (JP)**
- **Ito, Kenji**
  **Kuwana-shi, Mie-ken 511-0811 (JP)**
- **Shimazu, Eiichiro**
  **Kuwana-shi, Mie-ken 511-0811 (JP)**
- **Umemoto, Noboru**
  **Inabe-gun, Mie-ken 511-0243 (JP)**
- **Satomichi, Fuminori**
  **Inabe-gun, Mie-ken 511-0243 (JP)**

(74) Representative:
**Jenkins, Peter David et al**
**PAGE WHITE & FARRER**
**54 Doughty Street**
**London WC1N 2LS (GB)**

# (54) Highly hydrophilic and low friction ceramic sliding member

(57) In a high-hydrophilic and low-frictional ceramics sliding member composite oxide particles of an aluminate anhydride ($MAl_2O_4$, M means metal element) spinel type crystalline structure having a particle size similar to α-alumina (α-$Al_2O_3$) are uniformly dispersed in a population phase of α-alumina (α-$Al_2O_3$). In the aluminate anhydride ($MAl_2O_4$) M is selected from the group consisting of magnesium (Mg), zinc (Zn), cobalt (Co), nickel (Ni), copper (Cu), manganese (Mn) and iron (Fe). The content of the aluminate anhydride ($MAl_2O_4$) is 5 to 50wt.%.

FIG. 1

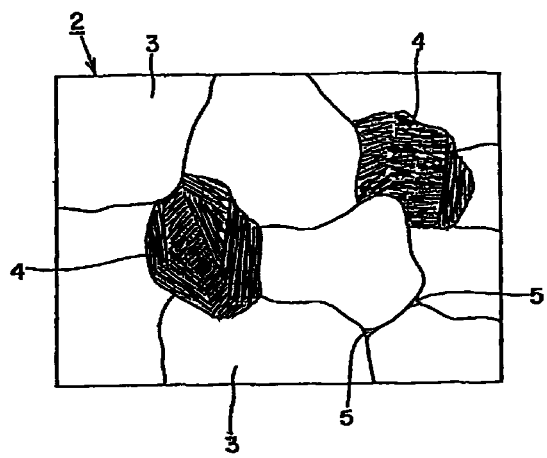


EP 1 006 090 A1

## Description

This present invention relates to a high-hydrophilic and low-frictional ceramics sliding member used for an open-close valve for a faucet or the like in the water service.

Materials for reducing the coefficient of friction in water heretofore known include, as disclosed in Japanese Patent Application Laid-open Publication No. 6-93277, Japanese Patent Application Laid-Open Publication No. 7-108774, and the like, a material in which diamond-like carbon is coated on the surface of an alumina material, a material in which a mixture of silicon carbide and carbon is coated on the surface of an alumina material, ceramics in which a number of pores serving as water reservoirs are uniformly dispersed, solid lubricant impregnated ceramics, oil impregnated ceramics, and the like. However, these conventional materials have difficulties in that the strength is insufficient, the coating serving for lubrication tends to peel off, the manufacturing unit price is expensive, etc.

In view of the aforementioned problems, it is an aim of the present invention to provide a high-hydrophilic and low-frictional ceramics sliding member which is low cost, high in mechanical strength and excellent in lubricating properties under the presence of water.

In the present invention, a compound of zinc (Zn) as a by-component is added to an alumina ($Al_2O_3$)-base ceramics material to thereby enhance the affinity with water and reduce the coefficient of friction under the presence of water.

One out of or both a compound of titanium (Ti) and a compound of iron (Fe), as a sintering assistant, is (or are) added to the alumina ($Al_2O_3$)-base ceramics material to thereby enhance sintering properties and enhance mechanical strength of a sintered body.

A dihydric metal compound capable of producing aluminate anhydride ($MAl_2O_4$) is added to alumina ($Al_2O_3$), which are calcined, whereby the aluminate anhydride ($MAl_2O_4$) are dispersed in a population phase of alumina ($Al_2O_3$). This provide a ceramics sintered body, which displays a high water adsorbing property and a low frictional property under the presence of water, being suitable for a sliding member.

In the present invention, for the satisfaction of the hydrophilic nature, strength, toughness and coefficient of friction of materials, the needle-like oxide particles of $ZnO \cdot nAl_2O_3$ and the composite oxide particles of zinc aluminate ($ZnAl_2O_4$) or aluminium niobate ($AlNbO_4$) are uniformly dispersed in a population phase of *a* alumina (*a* -$Al_2O_3$).

The composite oxide particles of zinc aluminate ($ZnAl_2O_4$) or aluminium niobate ($AlNbO_4$) of the spinel type crystalline structure having the characteristics for strongly absorbing water enhances the hydrophilic nature of material. The needle-like composite oxide particles of $ZnO \cdot nA1_20_3$ secures the strength and toughness of material.

Hereunder, embodiments of the present invention will be described, by way of example only, with reference to the accompanying drawings, in which:-

FIG. 1 is a tissue view schematically representing a high-hydrophilic and low-frictional ceramics sliding member according to the present invention.

FIG. 2 is a diagram representing the characteristics of the high-hydrophilic and low-frictional ceramics sliding member.

FIG. 3 is also a diagram representing the characteristics of the high-hydrophilic and low-frictional ceramics sliding member.

FIG. 4 is another diagram representing the characteristics of the high-hydrophilic and low-frictional ceramics sliding member.

FIG. 5 is still another diagram representing the characteristics of the high-hydrophilic and low-frictional ceramics sliding member.

FIG. 6 is a tissue view schematically representing the tissue of sintered body constituting the high-hydrophilic and low-frictional ceramics sliding member according to the second embodiment of the present invention.

FIG. 7 is a diagram representing a relationship between an aluminate anhydride ($MAl_2O_4$) contained in the ceramics sliding member and a coefficient of friction.

FIG. 8 is a diagram representing a relationship between the content of an aluminate anhydride ($MAl_2O_4$) contained in the ceramics sliding member, a coefficient of friction, and a strength.

FIG. 9 is a tissue view of a high-hydrophilic and low-frictional ceramics sliding member according to the third embodiment of the present invention.

FIG. 10 is a diagram representative of frictional characteristics of the ceramic sliding member and the conventional alumina material.

FIG. 11 is a diagram representative of a relationship between the adding quantity of $ZnO \cdot Al_2O_3$ and the strength in the ceramic sliding member.

FIG. 12 is a diagram representative of a relationship between the aspect ratio of $ZnO \cdot Al_2O_3$ particles and the strength in the ceramic sliding member.

FIG. 13 is a tissue view of a high-hydrophilic and low-frictional ceramics sliding member according to a fourth embodiment of the present invention.

FIG. 14 is a diagram representative of frictional characteristics of the ceramic sliding member and the conventional alumina material.

FIG. 15 a diagram representative of the adding quantity of $ZnO \cdot Al_2O_4$ and the frictional characteristics in the ceramic sliding member.

FIG. 16 is a diagram representative of wearing characteristics of the ceramic sliding member of the present invention and the conventional alumina material.

FIG. 17 is a diagram representative of wearing characteristics of the ceramic sliding member of the present invention and the conventional alumina material.

As shown in FIG. 1, a high-hydrophilic and low-frictional ceramics sliding member 2 according to the present invention comprises an alumina ($Al_2O_3$) base ceramics sintered body, and more specifically, composite oxide particles 4 containing zinc aluminate ($ZnAl_2O_4$) having a particle diameter of 6 μ m on the average are uniformly dispersed, in the form of a solid solution or a compound, in a matrix phase or a population phase 3 of *a* alumina (*a* -$Al_2O_3$) having a particle diameter of 6 μ m on the average, and compound particles 5 of titanium (Ti) are present in a grain boundary phase between a matrix phase or a population phase 3 of *a* alumina (*a* -$Al_2O_3$) and composite oxide particles 4 containing zinc aluminate ($ZnAl_2O_4$).

In place of the compound particles 5 of titanium (Ti), compound particles of iron (Fe) may present in the grain boundary phase. Alternatively, both the compound particles of titanium (Ti) and the compound particles of iron (Fe) may present in the grain boundary phase.

The high-hydrophilic and low-frictional ceramics sliding member according to the present invention is obtained by adding a dihydric metal compound capable of producing aluminate anhydride ($MAl_2O_4$) to alumina ($Al_2O_3$) and calcinating them.

As shown in FIG. 6, in the sintered body as the ceramics sliding member obtained, composite oxide particles 14 of an aluminate anhydride ($MAl_2O_4$) spinel type crystalline structure having a particle diameter similar to alumina ($Al_2O_3$) are uniformly dispersed, in the form of a solid solution or a compound, in a matrix phase or a population phase 13 of *a* alumina (*a* -$Al_2O_3$). Here, M represents a metal element, which combines with alumina ($Al_2O_3$) to produce salt.

The content of said aluminate anhydride ($MAl_2O_4$) to the ceramics sliding member is 5 to 50 wt.%. Metal M of the aluminate anhydride ($MAl_2O_4$) expressed by the chemical formula $MAl_2O_4$ comprises at least one out of magnesium (Mg), zinc (Zn), cobalt (Co), nickel (Ni), copper (Cu), manganese (Mn), and iron (Fe).

In the high-hydrophilic and low-frictional ceramics material 32 according to the present invention, shown in FIG. 9, the needle-like and/or plate-like composite oxide particles 34 containing zinc (Zn) and aluminium (Al) as main components are uniformly dispersed in a population phase 33 of *a* alumina (*a* -$Al_2O_3$). In the needle-like and/or plate-like composite oxide particles 34, an average of a composition ratio $ZnO:Al_2O_3$ when the main components, zinc (Zn) and aluminium (Al) are converted into oxide, is 1:3 or more. In the needle-like composite oxide particles 34, an aspect ratio (an elongation ratio) is 3 or more.

Further, in the high-hydrophilic and low-frictional ceramics sliding member 42 according to the present invention, shown in FIG. 13, needle-like and/or plate-like composite oxide particles 44 comprising $ZnO \cdot nAl_2O_3$ containing zinc (Zn) and aluminium (Al) as main components, and composite oxide particles 45 having a spinel type crystalline structure of zinc aluminate ($ZnAl_2O_4$) are uniformly dispersed in a matrix phase or a population phase 43 of *a* alumina (*a* -$Al_2O_3$). The content of said composite oxide particles having a spinel type crystalline structure of zinc aluminate ($ZnAl_2O_4$) contained in the high-hydrophilic and low-frictional ceramics sliding member according to the present invention is less than 30 wt.%. The high-hydrophilic and low-frictional ceramics sliding member according to the present invention displays excellent durability and low frictional property under the presence of water.

EXAMPLE 1

In the present invention, a plurality of molded products were prepared by using an alumina ($Al_2O_3$) powder as a main raw material, and variously changing the adding quantity of an zinc oxide (ZnO). The molded products were calcined for three (3) hours in the atmosphere at a temperature of 1550°C to obtained sintered bodies. Fig. 1 shows a tissue of the ceramics sliding member 2. A test piece for a ceramics sliding member having a diameter of 35 mm and a thickness of 5 mm was prepared from the sintered body, and the surface of time test piece for a ceramics sliding member was smoothened to have less than 0.4 of smoothness Rmax by lapping. City water dropped on the surface of the test piece for a ceramics sliding member obtained in the procedure as described above to measure contact angles of water droplets. An alumina ($Al_2O_3$) test piece was placed on the surface of the test piece for a ceramics sliding member according to the present invention, and a sliding test for grinding both the elements under the pressing load of 23.6 kgf in water at a temperature of 25°C was conducted to measure a coefficient of friction.

Further, a rod-like test piece for ceramics 4-point bending strength having a width of 4 mm, a thickness of 3 mm and a length of 40 mm was prepared from the aforementioned sintered body to carry out the 4-point bending strength test (JIS R1601).

As will be apparent from FIG. 2, in the ceramics sliding member 2 according to the present invention, the zinc oxide (ZnO) powder is added to the alumina ($Al_2O_3$) whereby the contact angle (wetting angle) of water droplets becomes small such as 25°C, and the coefficient of friction becomes small such as 0.25. That is, it is understood from this that the ceramics sliding member according to the present invention is high in hydrophilic nature and low in coefficient of friction. However, when the adding quantity of the zinc oxide (ZnO) powder to the alumina ($Al_2O_3$) powder raw material is less than 8 wt.%, the effect with respect to the sintering properties of the molded product is not sufficient; and when the adding quantity of the zinc oxide (ZnO) powder to the alumina ($Al_2O_3$) powder raw material exceeds less than 30 %, the sintering properties of the molded product remarkably worsens and the mechanical strength also lowers rapidly, as shown in FIG. 3. It has been also understood that crystal grains fall off during the sliding test of the test piece obtained from the sintered body, due to the deterioration of the sintered properties, and the coefficient of friction increases.

EXAMPLE 2

A plurality of molded products were prepared by using an alumina ($Al_2O_3$) powder as a main raw material, adding 10 wt.% of an zinc oxide (ZnO), and varying the adding quantity of titanium oxide ($TiO_2$) from 0 wt.% to 10 wt.%. The molded products were calcined similarly to the case of EXAMPLE 1. A test piece was processed from the obtained sintered body, and the contact angle of water droplets, the coefficient of friction, and the 4-point bending strength were measured.

As will be apparent from FIG. 4, it has been considered that the alumina ($Al_2O_3$) powder is used as a main raw material, and the titanium oxide ($TiO_2$) is added in addition to the zinc oxide (Zno) powder whereby the sintering properties of the molded product is enhanced, 4-point bending strength is 300 t 380 MPa, and the mechanical strength increases. However, when the adding quantity of the titanium oxide ($TiO_2$) powder to the alumina ($Al_2O_3$) powder and the titanium oxide ($TiO_2$) powder is less than 0.5 wt.%, the-effect with respect to the sintering properties of the molded product is not sufficient; and when the adding quantity of the titanium oxide ($TiO_2$) powder to the alumina ($Al_2O_3$) powder and the zinc oxide (ZnO) powder exceeds 5 %, the mechanical strength of the test piece lowers rapidly. The sintering properties of the molded product remarkably worsens and the mechanical strength also lowers rapidly. It has been also considered that crystal grains fall off during the sliding test of the test piece obtained from the sintered body, due to the deterioration of the sintered properties, and the coefficient of friction increases.

EXAMPLE 3

With respect to a test piece using iron oxide ($Fe_2O_3$) powder in place of the titanium oxide ($TiO_2$) as an additive, the test similar to EXAMPLE 2 was conducted. As a result, it has been understood that a sintered body for a ceramics sliding member excellent in sintering properties was obtained without impairing the hydrophilic nature and low frictional properties.

EXAMPLE 4

A plurality of molded products were prepared by using an alumina ($Al_2O_3$) powder as a main raw material, adding 10 wt.% of an zinc oxide (ZnO) and 1 wt.% of titanium oxide ($TiO_2$), and varying the adding quantity of iron oxide ($Fe_2O_3$) from 0 wt.% to 3 wt.%. The molded products were calcined similarly to the case of EXAMPLE 1. A test piece was processed from the obtained sintered body, and the contact angle of water droplets, the coefficient of friction, and the 4-point bending strength were measured.

It has been understood, as will be apparent from FIG. 5, that a suitable quantity of titanium oxide ($TiO_2$) powder and iron oxide ($Fe_2O_3$) powder are added, as a sintering assistant, to the alumina ($Al_2O_3$) powder as a main raw material whereby the mechanical strength of a sintered body for a ceramics sliding member is enhanced.

EXAMPLE 5

A molded product was prepared by using alumina ($Al_2O_3$) as a main raw material, adding 10 wt.% of one metal oxide out of magnesium (Mg), zinc (Zn), cobalt (Co), nickel (Ni), copper (Cu), manganese (Mn), and iron (Fe), and further adding a sintering assistant. The molded product was calcined in the atmosphere at a temperature of 1300 to 1600°C to obtain a sintered body (specimen). FIG. 6 is a schematic view representing the tissue of the sintered body according to the present invention. A disk-like test piece having a diameter of 35 mm and a thickness of 5 mm was prepared from the sintered body (specimen) of the present invention. The surface of the test piece was smoothened on the surface whose surface roughness Rmax is less than 0.4 by lapping. The obtained two test pieces are placed one upon the other, and the sliding test was carried out in water at a temperature of 25° C to measure the coefficient of friction.

It has been assured, as will be apparent from FIG. 7, that the sintered body (specimen) of the present invention is smaller in coefficient of friction and higher in water adsorbing properties in water than a single alumina by forming the aluminate anhydride ($MAl_2O_4$) in alumina ($Al_2O_3$). The reason is that empty pores without cations present polarities and strongly adsorb water in the aluminate anhydride ($MAl_2O_4$) spinel type crystalline structure.

EXAMPLE 6

Ten (10) kinds of sintered bodies (specimens) different in content of the aluminate anhydride ($MAl_2O_4$) were prepared, similarly to EXAMPLE 5, using the alumina ($Al_2O_3$) as a main raw material and varying the adding quantity of zinc oxide (ZnO). The sliding characteristics and strength of the sintered bodies (specimens) were measured.

As will be apparent from FIG. 8, it is understood that the sintered bodies (specimens) according to the present invention reduces the coefficient of friction as the content of the aluminate anhydride ($MAl_2O_4$) increases under 10 % thereof. According to the present invention, when the content of the aluminate anhydride ($MAl_2O_4$) occupied by the sintered bodies is 10 to 55 wt.%, the good sliding characteristics whose coefficient of friction is less than 0.3 are exhibited. With regard to the strength of the sintered bodies according to the present invention, the strength gradually lowers as the content of the aluminate anhydride ($MAl_2O_4$) occupied by the sintered bodies increases, and when the content of the aluminate anhydride ($MAl_2O_4$) occupied by the sintered bodies exceeds 50 %, the strength materially lowers, which not suitable for use as the sliding member.

EXAMPLE 7

A molded product having a predetermined shape was prepared from a mixture in which the needle-like composite oxide powder of $ZnO \cdot nAl_2O_3$ containing zinc (Zn) and aluminium (Al) and a small quantity of sintered assistant powder are added to *a* alumina (*a* $-Al_2O_3$) as main components. The molded product was calcined in the atmosphere to obtain a ceramics sliding member (specimen) 32 as a sintered body. FIG. 9 is a tissue view schematically showing the tissue of the ceramics sliding member 32 obtained. In the ceramics sliding member 32 of the present invention, the needle-like and/or plate-like composite oxide particles 34 of $ZnO \cdot nAl_2O_3$ containing zinc (Zn) and aluminium (Al) as main components are uniformly dispersed in a population phase 33 of *a* alumina (*a* $-Al_2O_3$). Disk-like test pieces having a diameter of 35 mm and a thickness of 5 mm were prepared from the ceramics sliding member 32 of the present invention, and the surface of the test piece was smoothened to the smoothness Rmax 0.4 or less by lapping. Thus obtained two test pieces were placed one upon the other, and the sliding frictional test was conducted in water at a temperature of 25°C to measure the coefficient of friction.

As will be apparent from FIG. 10, it has been confirmed that in the ceramics sliding member 32 of the present invention, the needle-like composite oxide 34 of $ZnO \cdot nAl_2O_3$ are formed in a matrix phase or a popuration phase 33 of *a* alumina (*a* $-Al_2O_3$), whereby the coefficient of friction is lowered, the high water adsorbing property is displayed, and the low frictional property is present in water.

The reason why the ceramics sliding member 32 of the present invention presents the low frictional property in water is that the needle-like composite oxide particles 34 of $ZnO \cdot nAl_20_3$ has the crystalline structure resemble to the spinel type, has empty pores similar to the spinel type crystalline structure and has the polarity, thus strongly adsorbing water.

Next, nine (9) kinds of ceramics materials (specimens) 32 with the adding quantity of the composite oxide powder of $ZnO \cdot 4Al_2O_3$ to the *a* alumina (*a* $-Al_2O_3$) as a main raw material variously changed were prepared in the procedure similar to that described above. The strength and breaking toughness of the ceramics sliding member were measured in the procedure similar to that as described above. The strength of the ceramics sliding member 32 of the present invention rarely changes even if the adding quantity of the composite oxide powder of $ZnO \cdot nAl_2O_3$ is changed as shown in FIG. 11, but as shown in FIG. 12, the breaking toughness value of the ceramics sliding member 32 of the present invention is remarkably high as compared with the ceramic material in which the composite oxide powder of $ZnO \cdot nAl_2O_3$ is not added to the *a* alumina (*a* $-Al_2O_3$) powder as the main raw material because the needle-like composite oxide particles 34 of $ZnO \cdot 4Al_2O_3$ are present in the material.

In EXAMPLE 7, a molded product having a predetermined shape was prepared from a mixture in which the needle-like composite oxide particles of the spinel type crystalline structure and a small quantity of sintered assistant powder are added to *a* alumina (*a* $-Al_2O_3$) powder as a main raw material, and the molded product is calcined in the procedure similar to that as described above to obtain the ceramics sliding member. It has been confirmed that even this ceramics sliding member can obtain the similar characteristics.

EXAMPLE 8

A molded product having a predetermined shape was prepared from a mixture in which the zinc oxide (ZnO) powder and a small quantity of sintered assistant powder are added to *a* alumina (*a* -$Al_2O_3$) powder as a main raw material. The molded product was calcined for three hours in the atmosphere at a temperature of 1500°C to obtain a ceramics sliding member (specimen) 42 as a sintered body. FIG. 13 is a tissue view schematically showing the tissue of the ceramics sliding member 42 obtained. In the ceramics sliding member 42 of the present invention, the needle-like and/or plate-like composite oxide particles 44 of ZnO • $nAl_2O_3$ containing zinc (Zn) and aluminium (Al) as main components, and the composite oxide particles 45 having a spinel type crystalline structure of zinc aluminate ($ZnAl_2O_4$) are uniformly dispersed in a matrix phase or a population phase 43 of *a* aluminum (*a* -$Al_2O_3$). Disk-like test pieces having a diameter of 35 mm and a thickness of 5 mm were prepared from the ceramics sliding member 42 of the present invention, and the surface of the test piece was smoothened to the smoothness Rmax 0.4 or less by lapping. Thus obtained two test pieces were placed one upon the other, and the sliding frictional test was conducted in water at a temperature of 25° C to measure the coefficient of friction.

As will be apparent from FIG. 14, it has been confined that in the ceramics sliding member 42 of the present invention, the composite oxide particles 45 of zinc aluminate ($ZnAl_2O_4$) and the needle-like composite oxide particles 44 of ZnO • $nAl_20_3$ are uniformly dispersed in a matrix phase or a population phase 43 of *a* alumina (*a* -$Al_2O_3$), whereby the coefficient of friction is further lowered, the high water adsorbing property is displayed, and the low frictional property is present in water.

The reason why the ceramics sliding member 42 of the present invention presents the high hydrophilic nature and low frictional property is that the composite oxide particles 45 of zinc aluminate ($ZnAl_2O_4$) has the spinel type crystalline structure, has empty pores and has an electric polarities, thus strongly adsorbing water as compared with the needle-like composite oxide particles 44 of ZnO • $nAl_20_3$.

Next, in the aforementioned ceramics sliding member 42, ceramics sliding member (specimen) 42 with the adding quantity of the composite oxide particles of zinc aluminate ($ZnAl_2O_4$) to the *a* alumina (*a* -$Al_2O_3$) changed in the range of 0 to 50 wt.% was prepared in the procedure similar to that as described above. The coefficient of friction of the ceramics sliding member 42 was measured in the procedure similar to that as described above. It has been understood as shown in FIG. 15 that when the adding quantity of the composite oxide of zinc aluminate ($ZnAl_2O_4$) increases, the coefficient of friction of the ceramics sliding member 42 becomes small, but when the adding quantity of the composite oxide of zinc aluminate ($ZnAl_2O_4$) exceeds 30 wt.%, the coefficient of friction of the ceramics sliding member 42 rapidly becomes large. This results from the fact that the quantity of the composite oxide particles 45 of zinc aluminate ($ZnAl_2O_4$) that fall off from the surface of the ceramics sliding member 42 increases.

Next, with respect to the aforementioned ceramics sliding members (specimens) 32 and 42 according to EXAMPLES 7 and 8 of the present invention and the conventional alumina materials (specimen), the reciprocating sliding frictional test was conducted in water for the evaluation of wearing characteristics. It has been understood as shown in FIG. 16 that the ceramics sliding members 32 and 42 according to the present invention can reduce the wearing amount by about 20% as compared with the conventional alumina material. Further, since the ceramics sliding members 32 and 42 according to the present invention have the high breaking toughness value as compared with the conventional alumina material, the wearing characteristics is enhanced.

Further, with respect to the aforementioned ceramics sliding members 32 and 42 and the conventional alumina materials, iron oxide powder was coated on the sliding surfaces of the respective materials, and the reciprocating sliding frictional test was conducted in water for the evaluation of wearing characteristics. It has been understood as shown in FIG. 17 that the ceramics sliding members 32 and 42 according to the present invention can reduce the wearing amount by about 30% as compared with the conventional alumina material. The form of the wearing in the aforementioned reciprocating sliding frictional test belongs to the aggressive wear. The wearing amount Ws of the ceramics sliding member 32 and 42 is in inverse proportion to the breaking toughness value and hardness, as expressed in the following equation.

$$Ws = E^{4/5} \times KIc^{-1/2} \times Hv^{-57/40}$$

wherein, E: Young's modulus

KIc: Breaking toughness value
Hv: Hardness

Accordingly, since the ceramics sliding member 32 according to EXAMPLE 7 of the present invention has the high breaking toughness value as compared with the conventional alumina material, the wearing characteristics was enhanced. Further, since the ceramics sliding member 32 of the present invention does not produce the composite oxide particles 45 of zinc aluminate ($ZnA1_20_4$) having a relative less wearing characteristics and has the high breaking toughness value as compared with the ceramic sliding member 42, the wearing characteristics was further enhanced.

EXAMPLE 9

The ceramics sliding member of the present invention is a ceramics sintered body mainly used for a water stop valve for a mixing water plug, and comprises, as a matrix phase, alumina ($Al_2O_3$) which is relatively high in mechanical strength, and as main components, aluminium niobate ($AlNbO_4$) containing niobium (Nb) which generates a high electric field or zinc aluminate ($ZnAl_2O_4$) containing zinc (Zn).

It has been assured as the result of analysis made by an X-ray diffraction (RD) analyzer that in the ceramics sintered body as the sliding member according to the present invention, a compound or a solid solution of a composite oxide of which constituent elements comprise niobium (Nb) or zinc (Zn) and aluminium (Al), or a compound or a solid solution of titanium white ($TiO_2$) are dispersed in the matrix phase formed of alumina ($Al_2O_3$).

In the ceramics sliding member of the present invention, as a frictional mating member, the sane quality of ceramics sliding member can be selected. However, even if alumina ($Al_2O_3$), silicon carbide ($Si_3C_4$) or silicon nitride ($Si_3N_4$) is selected as the frictional mating material, it has a similar hydrophilic nature and exhibits excellent low frictional properties and abrasion resistance under the presence of water.

Alumina ($Al_2O_3$) powder was used as a main raw material to prepare eight kinds of molded substances varying the amount of addition of niobium oxide ($Nb_2O_5$) powder. The molded substance was baked for three hours in the atmosphere at a temperature of 1400° C to obtain a sintered body. Test pieces 1A to 1H of which diameter is 35 mm, and thickness is 5 mm were prepared from the sintered body. The planes of the test pieces were smoothened by lapping less than Rmax 0.4. City water were dropped on the surfaces of the test pieces 1A to 1H to measure a contact angle or wettability. Further, two test pieces were put one on the other, and the sliding test was conducted in hot water at a temperature of 80° C to measure the coefficient of friction. The contact angle termed herein represents an angle from a boundary surface between solid and liquid to a boundary surface between air and liquid at a point where the surface of liquid is in contact with the surface of solid. The smaller the contact angle, the liquid spreads over the solid surface, to show the nature which wets the solid surface. That is, the smaller the contact angle, the liquid lubricity of the sliding surface between the solids is improved.

As will be apparent from the characteristics of the test pieces 1A to 1H in Table 1, it has been assured that in the ceramics sliding member according to the present Example, the contact angle and the coefficient of friction lower and the high hydrophilic nature and low frictional properties were exhibited by adding the niobium oxide ($Nb_2O_5$) to the alumina ($Al_2O_3$). However, when the amount of addition of the niobium oxide ($Nb_2O_5$) to the alumina ($Al_2O_3$) exceeds 30 wt.%, the sintering properties of the molded substance was materially deteriorated, and the strength was also lowered rapidly. It has been understood that when the sintering properties of the molded substance is deteriorated, crystalline grains of the sintered body fall off, and the coefficient of friction increases.

Table 1

| sample | $Al_2O_3$ wt% | $TiO_2$ wt% | $Nb_2O_5$ wt% | contact angle | coeff'ent friction | strength (MPa) |
|---|---|---|---|---|---|---|
| 1A | 100 | 0 | 0 | 50 | 0.58 | 320 |
| 1B | 97 | 0 | 3 | 30 | 0.3 | 310 |
| 1C | 95 | 0 | 5 | 17 | 0.2 | 300 |
| 1D | 90 | 0 | 10 | 11 | 0.12 | 300 |
| 1E | 80 | 0 | 20 | 10 | 0.09 | 270 |
| 1F | 75 | 0 | 25 | 9 | 0.15 | 250 |
| 1G | 70 | 0 | 30 | 9 | 0.4 | 130 |
| 1H | 60 | 0 | 40 | 10 | 0.45 | 80 |
| 2A | 95 | 5 | 0 | 53 | 0.59 | 330 |
| 2B | 92 | 5 | 3 | 32 | 0.33 | 320 |
| 2C | 90 | 5 | 5 | 18 | 0.21 | 310 |
| 2D | 85 | 5 | 10 | 10 | 0.11 | 300 |

Table 1 (continued)

| sample | $Al_2O_3$ wt% | $TiO_2$ wt% | $Nb_2O_5$ wt% | contact angle | coeff'ent friction | strength (MPa) |
|---|---|---|---|---|---|---|
| 2E | 75 | 5 | 20 | 8 | 0.08 | 280 |
| 2F | 70 | 5 | 25 | 9 | 0.15 | 260 |
| 2G | 65 | 5 | 30 | 10 | 0.39 | 130 |
| 2H | 55 | 5 | 40 | 9 | 0.46 | 85 |
| 3A | 90 | 10 | 0 | 58 | 0.62 | 330 |
| 3B | 87 | 10 | 3 | 34 | 0.35 | 310 |
| 3C | 85 | 10 | 5 | 18 | 0.23 | 310 |
| 3D | 80 | 10 | 10 | 12 | 0.13 | 300 |
| 3E | 70 | 10 | 20 | 11 | 0.11 | 270 |
| 3F | 65 | 10 | 25 | 10 | 0.18 | 260 |
| 3G | 60 | 10 | 30 | 10 | 0.41 | 120 |
| 3H | 50 | 10 | 40 | 10 | 0.44 | 80 |
| 11A | 85 | 15 | 0 | 60 | 0.7 | 335 |
| 11B | 65 | 15 | 20 | 40 | 0.4 | 200 |
| 11C | 45 | 15 | 40 | 20 | 0.42 | 60 |

EXAMPLE 10

Alumina ($Al_2O_3$) powder was used as a main raw material. Eight kinds of molded substances were prepared by adding 5 wt.% of titanium white ($TiO_2$) powder and varying the amount of addition of niobium oxide ($Nb_2O_5$) powder from 0 to 40 wt.% to alumina ($Al_2O_3$). The molded substance was baked under the conditions similar to EXAMPLE 1. Similar test pieces 2A to 2H were prepared from the sintered body. The contact angles and coefficient of frictions of the respective test pieces 2A to 2H were measured by the similar test.

As will be apparent from the characteristics of the test pieces 2A to 2H in Table 1, it has been assured that in the ceramics sliding member according to the present Example, the contact angle and the coefficient of friction lower and the high hydrophilic nature and low frictional properties were exhibited by adding the niobium oxide ($Nb_2O_5$) to the alumina ($Al_2O_3$). However, when the amount of addition of the niobium oxide ($Nb_2O_5$) to the alumina ($Al_2O_3$) exceeds 30 wt.%, the sintering properties of the molded substance was materially deteriorated, and the strength was also lowered rapidly. It has been understood that when the sintering properties of the molded substance is deteriorated, crystalline grains of the sintered body fall off, and the coefficient of friction increases. It has been further found that when titanium white ($TiO_2$) is added to alumina ($Al_2O_3$), the minuteness of the sintered body is accelerated to obtain a sintered body which is higher in strength than that of a sintered body in which titanium white ($TiO_2$) is not added to alumina ($Al_2O_3$).

EXAMPLE 11

Alumina ($Al_2O_3$) powder was used as a main raw material. Eight kinds of molded substances were prepared by adding 10 wt.% of titanium white ($TiO_2$) powder and varying the amount of addition of niobium oxide ($Nb_2O_5$) powder from 0 to 40 wt.% to alumina ($Al_2O_3$). The molded substance was baked under the conditions similar to EXAMPLE 1. Similar test pieces 3A to 3H were prepared from the sintered body. The contact angles and coefficient of frictions of the test pieces 3A to 3H were measured by the similar test, respectively.

It has been found that in the ceramics sliding member according to the present invention, the hydrophilic nature and frictional characteristics can be improved without impairing the strength by adding a proper amount of niobium oxide ($Nb_2O_5$) to alumina ($Al_2O_3$).

As COMPARATIVE EXAMPLES 11A to 11C, molded substances were prepared by making the amount of addition of titanium white ($TiO_2$) powder of 15 wt.% to alumina ($Al_2O_3$) powder and varying the amount of addition of niobium oxide ($Nb_2O_5$) to 0 wt.%, 20 wt.% and 40 wt.%. The molded substance was baked under the conditions similar to EXAMPLE 1. Similar test pieces 11A to 11C were prepared from the sintered body. The contact angles and coefficient of frictions of the respective test pieces 3A to 3H were measured by the similar test.

As will be apparent from the characteristics of the test pieces 11A to 11C shown in Table 1, in the ceramics sliding member according to the present EXAMPLE, no improvement in the hydrophilic nature and frictional characteristics were considered.

EXAMPLE 12

Alumina ($Al_2O_3$) powder was used as a main raw material to prepare eight kinds of molded substances varying the amount of addition of zinc oxide (ZnO) powder. The molded substance was baked for three hours in the atmosphere at a temperature of 1500° C to obtain a sintered body. Test pieces 4A to 4H of which diameter is 35 mm and thickness is 5 mm were prepared from the sintered body. The planes of the test pieces were smoothened by lapping less than Rmax 0.4. City water were dropped on the surfaces of the test pieces 4A to 4H to measure a contact angle. Further, two test pieces 4A to 4H were put one on the other, and the sliding test was conducted in hot water at a temperature of 80° C to measure the coefficient of friction.

As will be apparent from the characteristics of the test pieces 4A to 4H in Table 2, it has been assured that in the ceramics sliding member according to the present Example, the contact angle and the coefficient of friction lower and the high hydrophilic nature and low frictional properties were exhibited by adding the zinc oxide (ZnO) to the alumina ($Al_2O_3$). However, when the amount of addition of the zinc oxide (ZnO) to the alumina ($Al_2O_3$) exceeds 30 wt.%, the sintering properties of the molded substance was materially deteriorated, and the strength was also lowered rapidly. It has been understood that when the sintering properties of the molded substance is deteriorated, crystalline grains of the sintered body fall off, and the coefficient of friction increases.

Table 2

| sample | $Al_2O_3$ wt% | $TiO_2$ wt% | $Nb_2O_5$ wt% | contact angle | coeff'ent friction | strength (MPa) |
|---|---|---|---|---|---|---|
| 4A | 100 | 0 | 0 | 50 | 0.58 | 320 |
| 4B | 97 | 0 | 3 | 27 | 0.28 | 315 |
| 4C | 95 | 0 | 5 | 15 | 0.19 | 310 |
| 4D | 90 | 0 | 10 | 10 | 0.11 | 310 |
| 4E | 80 | 0 | 20 | 8 | 0.08 | 270 |
| 4F | 75 | 0 | 25 | 9 | 0.13 | 255 |
| 4G | 70 | 0 | 30 | 10 | 0.42 | 125 |
| 4H | 60 | 0 | 40 | 11 | 0.45 | 70 |
| 5A | 95 | 5 | 0 | 53 | 0.59 | 330 |
| 5B | 92 | 5 | 3 | 31 | 0.31 | 315 |
| 5C | 90 | 5 | 5 | 18 | 0.18 | 310 |
| 5D | 85 | 5 | 10 | 9 | 0.1 | 305 |
| 5E | 75 | 5 | 20 | 8 | 0.07 | 285 |
| 5F | 70 | 5 | 25 | 8 | 0.14 | 270 |
| 5G | 65 | 5 | 30 | 9 | 0.36 | 125 |
| 5H | 55 | 5 | 40 | 10 | 0.45 | 80 |
| 6A | 90 | 10 | 0 | 58 | 0.62 | 330 |
| 6B | 87 | 10 | 3 | 32 | 0.33 | 320 |
| 6C | 85 | 10 | 5 | 15 | 0.21 | 315 |
| 6D | 80 | 10 | 10 | 10 | 0.12 | 310 |
| 6E | 70 | 10 | 20 | 9 | 0.1 | 275 |
| 6F | 65 | 10 | 25 | 9 | 0.17 | 260 |

Table 2 (continued)

| sample | $Al_2O_3$ wt% | $TiO_2$ wt% | $Nb_2O_5$ wt% | contact angle | coeff'ent friction | strength (MPa) |
|---|---|---|---|---|---|---|
| 6G | 60 | 10 | 30 | 10 | 0.42 | 125 |
| 6H | 50 | 10 | 40 | 10 | 0.43 | 75 |
| 12A | 85 | 15 | 0 | 60 | 0.7 | 335 |
| 12B | 65 | 15 | 20 | 38 | 0.4 | 195 |
| 12C | 45 | 15 | 40 | 21 | 0.41 | 55 |

EXAMPLE 13

Alumina ($Al_2O_3$) powder was used as a main raw material to prepare eight kinds of molded substances by adding 5 wt.% of titanium white ($TiO_2$) powder and varying the amount of addition of zinc oxide (ZnO) powder from 0 to 40 wt.%. The molded substance was baked under the conditions similar to EXAMPLE 4. Similar test pieces 5A to 5H were prepared from the sintered body. The contact angles and coefficient of frictions of the respective test pieces 5A to 5H were measured by the similar test.

As will be apparent from the characteristics of the test pieces 5A to 5H in Table 2, it has been assured that in the ceramics sliding member according to the present Example, the contact angle and the coefficient of friction lower and the high hydrophilic nature and low frictional properties were exhibited by adding the zinc oxide (ZnO) to the alumina ($Al_2O_3$). However, when the amount of addition of the zinc oxide (ZnO) to the alumina ($Al_2O_3$) exceeds 30 wt.%, the sintering properties of the molded substance was materially deteriorated, and the strength was also lowered rapidly. It has been understood that when the sintering properties of the molded substance is deteriorated, crystalline grains of the sintered body fall off, and the coefficient of friction increases. It has been further found that when titanium white ($TiO_2$) is added to alumina ($Al_2O_3$), the minuteness of the sintered body is accelerated and the sintered body is higher in strength than that of a sintered body in which titanium white ($TiO_2$) is not added to alumina ($Al_2O_3$).

EXAMPLE 14

Alumina ($Al_2O_3$) powder was used as a main raw material to prepare eight kinds of molded substances by adding 10 wt.% of titanium white ($TiO_2$) powder and varying the amount of addition of niobium oxide ($Nb_2O_5$) powder from 0 to 40 wt.%. The molded substance was baked under the conditions similar to EXAMPLE 4. Similar test pieces 6A to 6H were prepared from the sintered body. The contact angles and coefficient of frictions of the respective test pieces 6A to 6H were measured by the similar test.

It has been found that in the ceramics sliding member according to the present invention, the hydrophilic nature and frictional characteristics can be improved without impairing the strength by adding a proper amount of zinc oxide (ZnO) to alumina ($Al_2O_3$).

As COMPARATIVE EXAMPLES 12A to 12C, alumina ($Al_2O_3$) powder was used as a main raw material to prepare molded substances. The molded substances were prepared by adding 15 wt.% of titanium white ($TiO_2$) powder and varying the amount of addition of zinc oxide (ZnO) powder to 0 wt.%, 20 wt.% and 40 wt.%. The molded substance was baked under the conditions similar to EXAMPLE 4. Similar test pieces 12A to 12C were prepared from the sintered body. The contact angles and coefficient of frictions of the respective test pieces 12A to 12C were measured by the similar test.

As will be apparent from the characteristics of the test pieces 12A to 12C shown in Table 2, in the ceramics sliding member according to the COMPARATIVE EXAMPLE, no improvement in the hydrophilic nature and frictional characteristics were considered.

As described above, the present invention is characterized in that composite oxide particles containing zinc aluminate ($ZnAl_2O_4$) as a main component are uniformly dispersed, in the form of a solid solution or a compound, in a population phase of *a* alumina (*a* -$Al_2O_3$), and at least one of compound particles of titanium (Ti) and compound particles of iron (Fe) is present in a grain boundary phase between *a* alumina (*a* -$Al_2O_3$) and zinc aluminate ($ZnAl_2O_4$). The alumina base ceramics sliding member have a high mechanical strength and a high hydrophilic nature and display low frictional properties and low wearing characteristic under the presence of water.

As described above, according to the present invention, since composite oxide particles of an aluminate anhydride ($MAl_2O_4$) spinet type crystalline structure having a particle diameter similar to alumina ($Al_2O_3$) are uniformly dispersed, in the form of a solid solution or a compound, in a matrix phase or a population phase of *a* alumina (*a* -$Al_2O_3$), an alumina base ceramics sliding member having a high hydrophilic nature, a low frictional property and a low wearing characteristic under the presence of water is obtained.

As described above, according to the present invention, the needle-like and/or plate-like composite oxide particles containing zinc (Zn) and aluminium (Al) as main components are uniformly dispersed in a matrix phase or a population phase of *a* alumina (*a* -$Al_2O_3$) as a sintered body, to thereby obtain an alumina base ceramics sliding member which has a high hydrophilic nature, a low frictional property and a low wearing property under the presence of water.

A summary of the reference numerals used in the accompanying drawings is provided below:

2: ceramics sliding member
3: population phase of *a* alumina (*a* -$Al_2O_3$)
4: composite oxide particles containing zinc aluminate ($ZnAl_2O_4$)
5: compound particles of titanium (Ti)
12: ceramics sliding member
13: population phase of *a* alumina (*a* -$Al_2O_3$)
14: composite oxide particles of zinc aluminate ($ZnAl_2O_4$)
32: ceramics sliding member
33: population phase of *a* alumina (*a* -$Al_2O_3$)
34: needle-like and/or plate-like composite oxide particles
35: composite oxide particles of spinel structure
42: ceramics sliding member
43: population phase of *a* alumina (*a* -$Al_2O_3$)
44: needle-like and/or plate-like composite oxide particles
45: composite oxide particles of spinel structure

**Claims**

1. A high-hydrophilic and low-frictional ceramics sliding member characterized in that composite oxide particles of an aluminate anhydride ($MAl_2O_4$, M means metal element) spinel type crystalline structure having a particle size similar to *a* alumina (*a* -$Al_2O_3$) are uniformly dispersed, in the form of a solid solution or a compound, in a population phase of *a* alumina (*a* -$Al_2O_3$).

2. The high-hydrophilic and low-frictional ceramics sliding member according to claim 1, wherein said aluminate anhydride ($MAl_2O_4$) comprises at least one selected from the group consisting of magnesium (Mg), zinc (Zn), cobalt (Co), nickel (Ni), copper (Cu), manganese (Mn) and iron (Fe).

3. The high-hydrophilic and low-frictional ceramics sliding member according to claim 1, wherein the content of said aluminate anhydride ($MAl_2O_4$) is 5 to 50 wt.%.

4. A high-hydrophilic and low-frictional ceramics sliding member characterized in that needle-like and/or plate-like composite oxide particles containing zinc (Zn) and aluminium (Al) as main components are uniformly dispersed in a population phase of *a* alumina (*a* -$Al_2O_3$).

5. The high-hydrophilic and low-frictional ceramics sliding member according to claim 4, wherein in said needle-like and/or plate-like composite oxide particles, an average of a composition ratio $ZnO:Al_2O_3$ when zinc (Zn) and aluminum (Al) are converted into oxide, is 1:3 or more.

6. The high-hydrophilic and low-frictional ceramics sliding member according to claim 4, wherein an aspect ratio of said needle-like and/or plate-like composite oxide particles is 3 or more.

7. A high-hydrophilic and low-frictional ceramics sliding member characterized in that composite oxide particles containing zinc aluminate ($ZnAl_2O_4$) as a main component are uniformly dispersed, in the form of a solid solution or a compound in a population phase of *a* alumina (*a* -$Al_2O_3$), and at least one of compound particles of titanium (Ti) and compound particles of iron (Fe) is present in a grain boundary phase between said population phase and said composite oxide particles.

8. The high-hydrophilic and low-frictional ceramics sliding member according to claim 7, wherein the content ratio of said compound of zinc (Zn) is 3 to 25 wt.%.

9. The high-hydrophilic and low-frictional ceramics sliding member according to claim 7, comprising a compound of 3 to 25 wt.% of zinc (Zn), an oxide of 0.1 to 5 wt.% of titanium (Ti), an oxide of 0.1 to 3 wt.% of iron (Fe) and balance of alumina ($Al_2O_3$).

**10.** A high-hydrophilic and low-frictional ceramics sliding member characterized in that needle-like and/or plate-like composite oxide particles containing zinc (Zn) and aluminium (Al) as main components, and composite oxide particles having a spinel type crystalline structure of zinc aluminate ($ZnAl_2O_4$) are uniformly dispersed.

**11.** The high-hydrophilic and low-frictional ceramics sliding member according to claim 10, wherein the content of said composite oxide particles having a spinel type crystalline structure of zinc aluminate ($ZnAl_2O_4$) is less than 30 wt.%.

**12.** A high-hydrophilic and low-frictional ceramics sliding member comprising alumina ($Al_2O_3$) as a main component and at least one compound of niobium (Nb) and zinc (Zn) of 3 to 25 wt.% in converted in niobium oxide ($Nb_2O_5$) and zinc oxide (ZnO) as an assistant component, the tissue comprising a composite oxide of aluminium (Al) and niobium (Nb) including aluminium niobate ($AlNbO_4$) as a main component is dispersed in a population phase of alumina ($Al_2O_3$) in the form of a solid solution or a compound or a composite oxide of aluminium (Al) and zinc (Zn) including zinc aluminate ($ZnAl_2O_4$) as a main component is dispersed in a population phase of alumina ($Al_2O_3$) in the form of a solid solution or a compound.

**13.** A high-hydrophilic and low-frictional ceramics sliding member comprising alumina ($Al_2O_3$) as a main component, 3 to 25 wt.% of compound of niobium (Nb) and 3 to 10 wt.% of oxide of titanium (Ti), the tissue comprising a composite oxide of aluminium (Al) and niobium (Nb) including aluminium niobate ($AlNbO_4$) as a main component is dispersed in a population phase of alumina ($Al_2O_3$) in the form of a solid solution or a compound.

**14.** A high-hydrophilic and low-frictional ceramics sliding member comprising alumina ($Al_2O_3$) as a main component, 3 to 25 wt.% of compound of zinc (Zn) and 3 to 10 wt.% of oxide of titanium (Ti), the tissue comprising a composite oxide of aluminium (Al) and zinc (Zn) including zinc aluminate ($ZnAl_2O_4$) as a main component is dispersed in a population phase of alumina ($Al_2O_3$) in the form of a solid solution or a compound.

**15.** The high-hydrophilic and low-frictional ceramics sliding member according to claim 12 to 14, wherein the opposite member against said ceramics sliding member is one selected from a group consisting of alumina ($Al_2O_3$), silicon carbide ($Si_3C_4$) silicon nitride ($Si_3N_4$).

**16.** The high-hydrophilic and low-frictional ceramics sliding member according to claims 7, 10 and 12 to 14, wherein a particle site of said *a* alumina (*a* -$Al_2O_3$) is 6 μ m on the average, and a particle size of said zinc aluminate ($ZnAl_2O_4$) is 6 μ m on the average.

**17.** The high-hydrophilic and low-frictional ceramics sliding member according to claims 1, 4, 7, 10 and 12 to 14, wherein said ceramics sliding member is used under the presence of water.

**18.** The high-hydrophilic and low-frictional ceramics sliding member according to claims 1, 4, 7, 10 and 12 to 14, wherein said ceramics sliding member is used for an open-close valve for mixed water with heated water.

FIG. 1

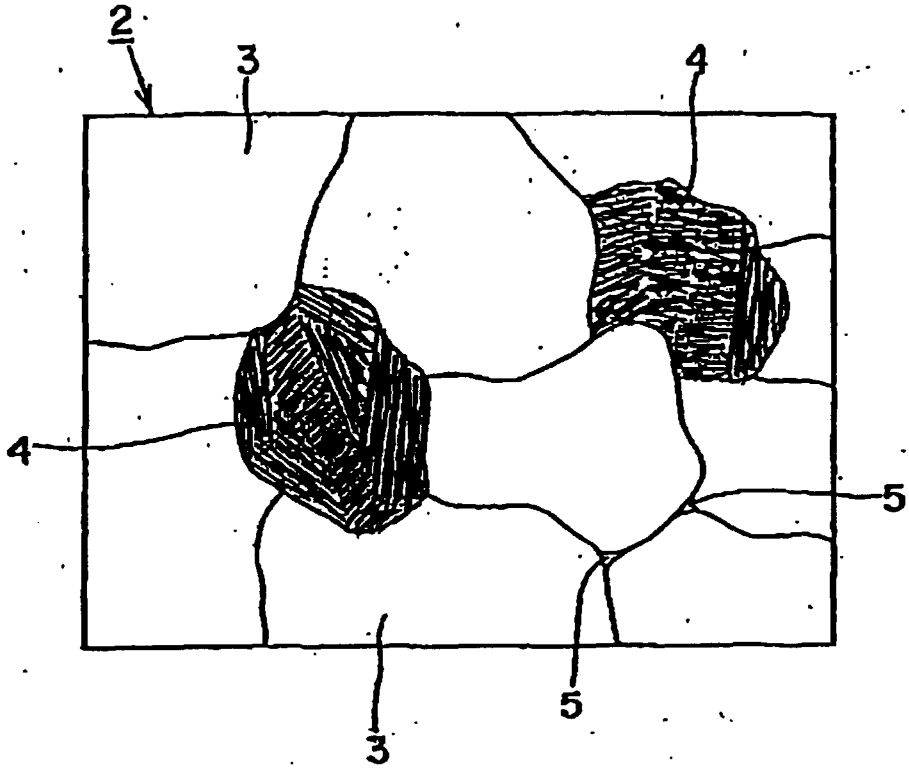

FIG. 2

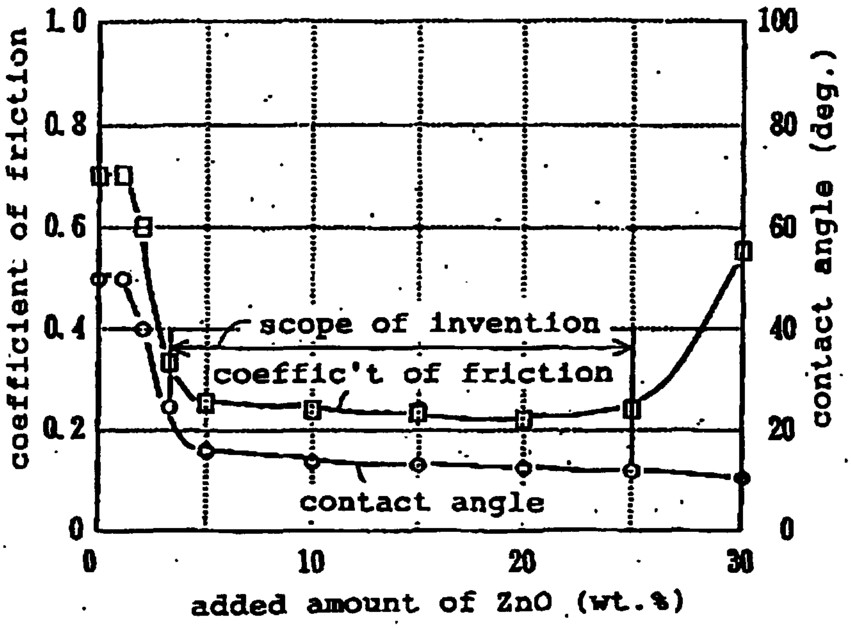
1.0
0.8
0.6
0.4
0.2
0
100
80
60
40
20
0
coefficient of friction
contact angle (deg.)
scope of invention
coeffic't of friction
contact angle
0
10
20
30
added amount of ZnO (wt.%)

FIG. 3

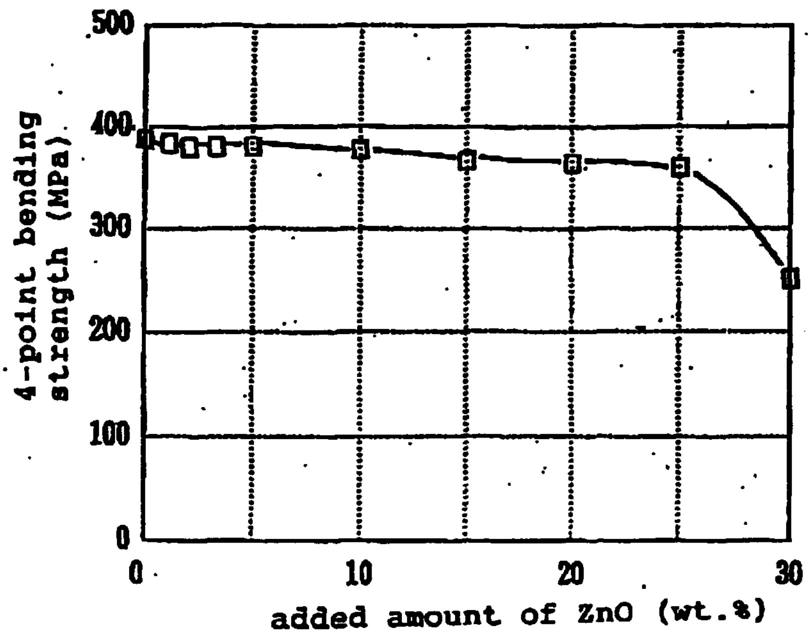
500
400
300
200
100
0
4-point bending strength (MPa)
0
10
20
30
added amount of ZnO (wt.%)

FIG. 4

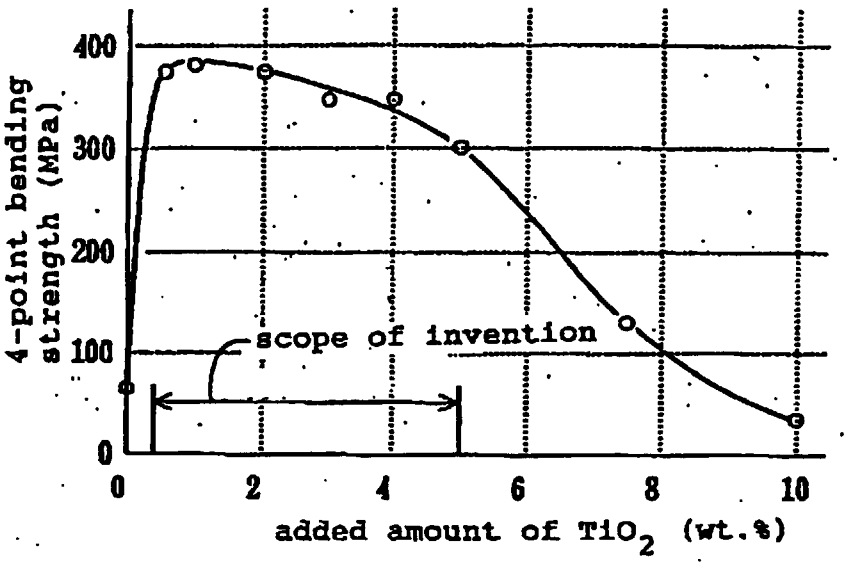
4-point bending strength (MPa)
400
300
200
100
0
scope of invention
0
2
4
6
8
10
added amount of $TiO_2$ (wt.%)

FIG. 5

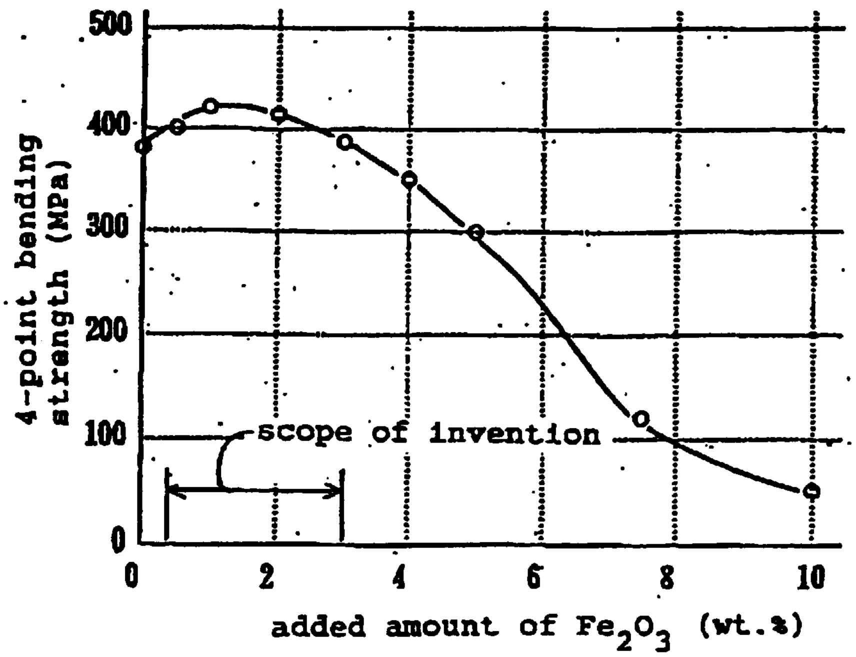
4-point bending strength (MPa)
500
400
300
200
100
0
scope of invention
0
2
4
6
8
10
added amount of $Fe_2O_3$ (wt.%)

FIG. 6

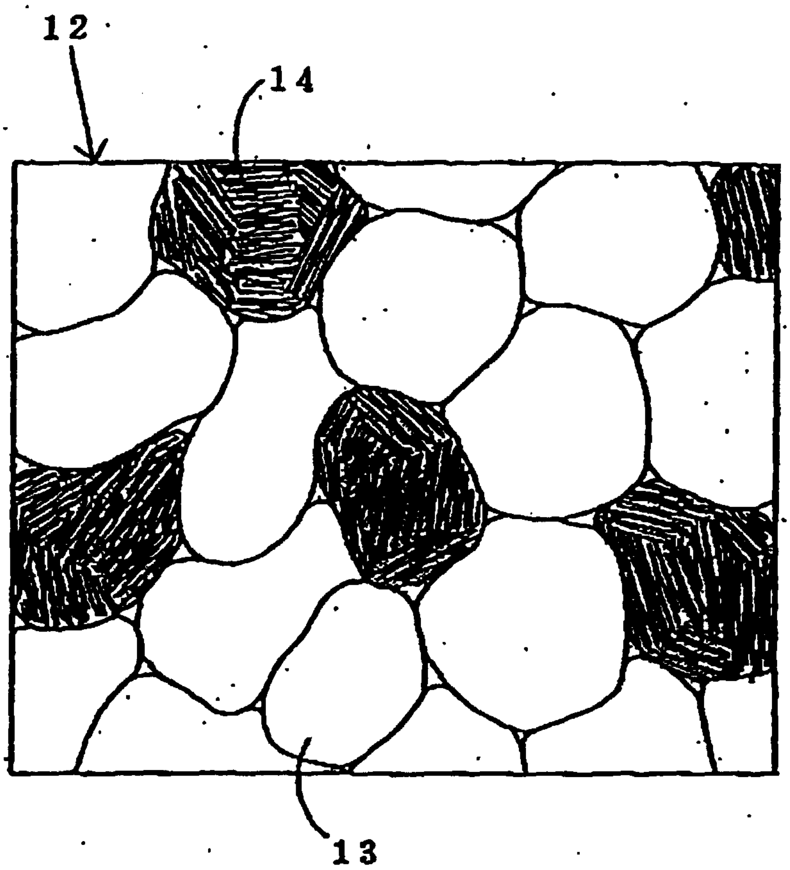

FIG. 7

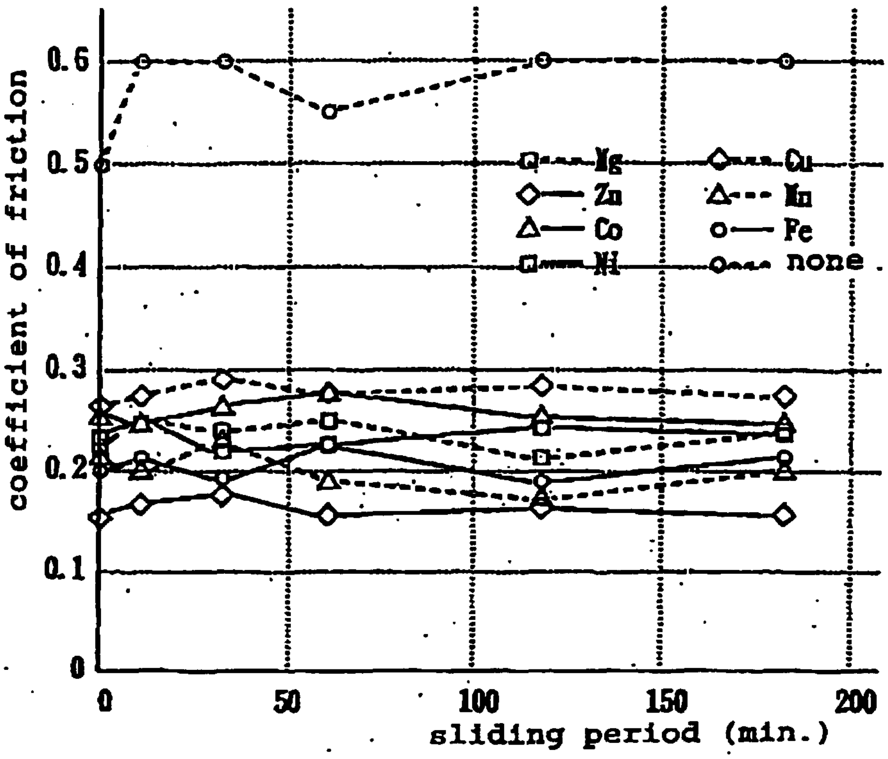
coefficient of friction
0.6
0.5
0.4
0.3
0.2
0.1
0
Mg
Cu
Zn
Mn
Co
Fe
Ni
none
0
50
100
150
200
sliding period (min.)

FIG. 8

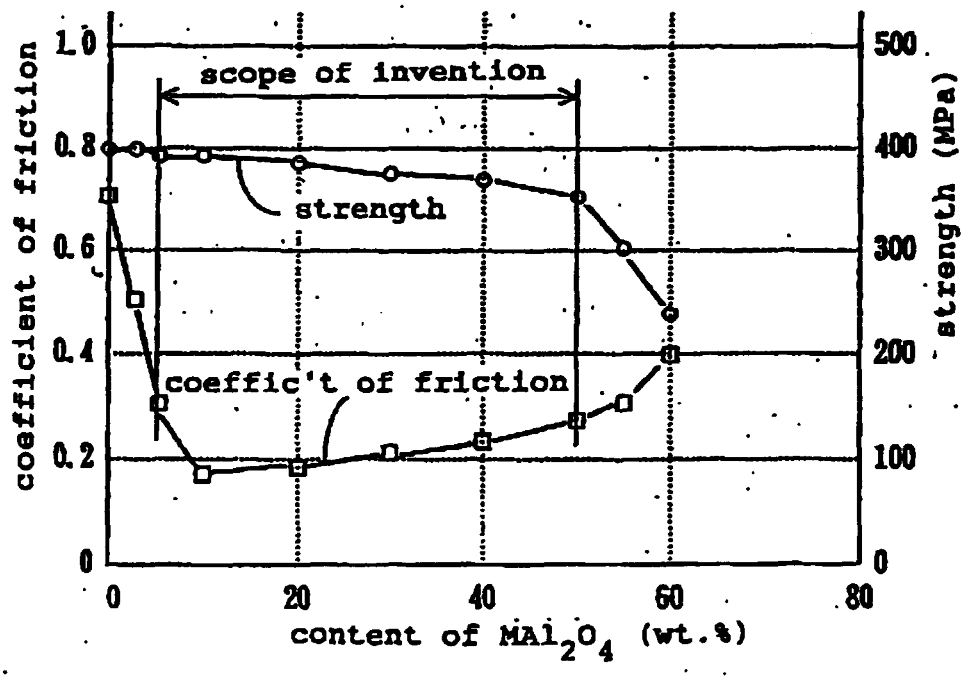
coefficient of friction
1.0
0.8
0.6
0.4
0.2
0
scope of invention
strength
coeffic't of friction
500
400
300
200
100
0
strength (MPa)
0
20
40
60
80
content of $MAl_2O_4$ (wt.%)

FIG. 9

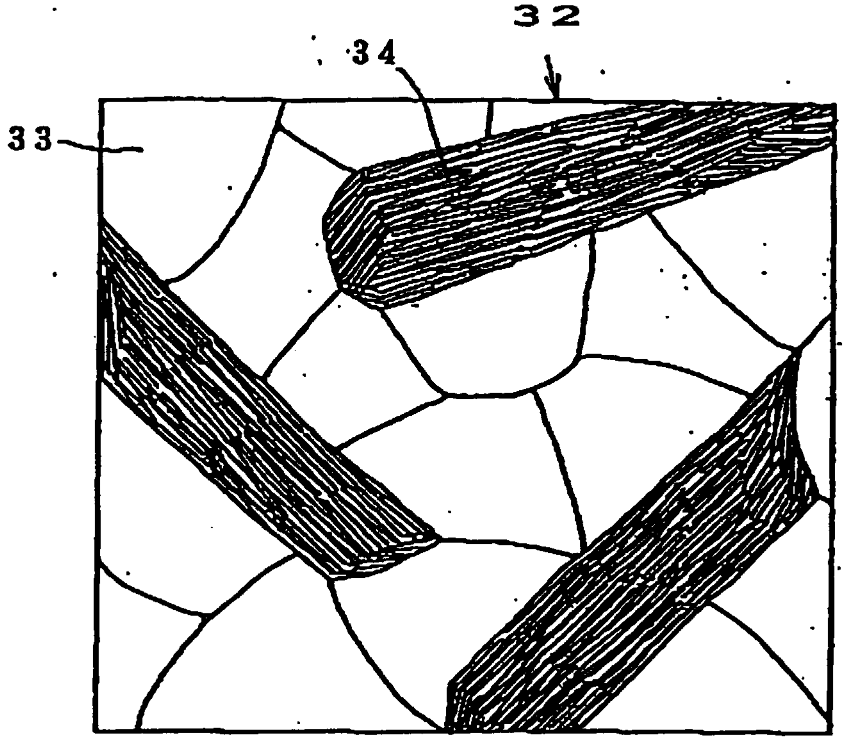
32
34
33

FIG. 10

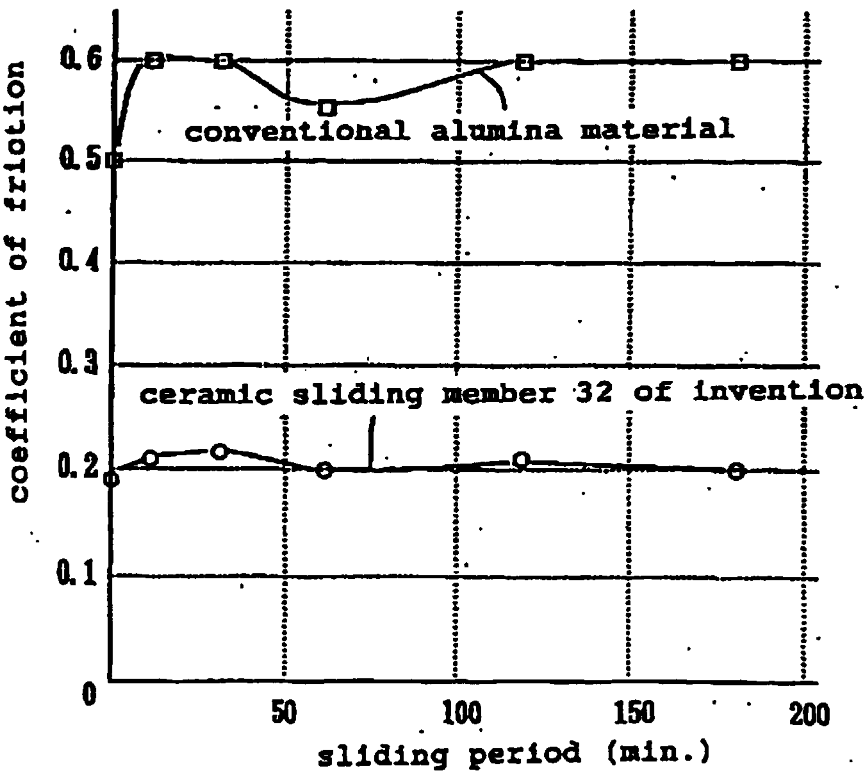
coefficient of friction
0.6
0.5
0.4
0.3
0.2
0.1
0
conventional alumina material
ceramic sliding member 32 of invention
50
100
150
200
sliding period (min.)

FIG. 11

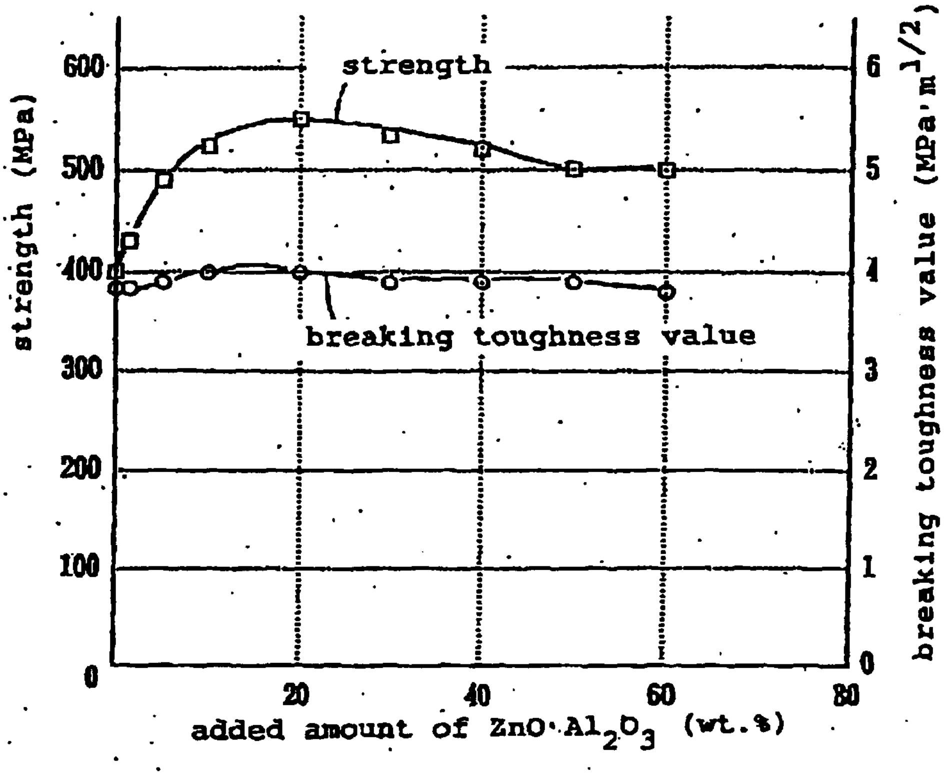
strength
breaking toughness value
strength (MPa)
breaking toughness value (MPa·m1/2)
0
100
200
300
400
500
600
1
2
3
4
5
6
20
40
60
80
added amount of ZnO·Al2O3 (wt.%)

FIG. 12

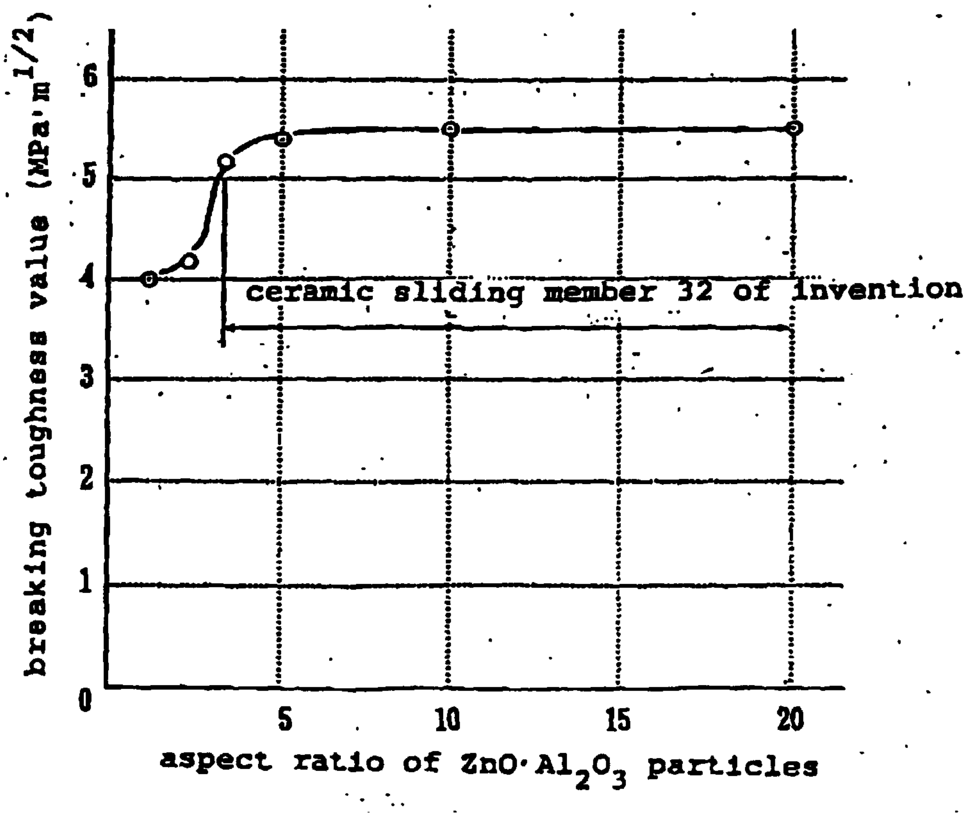
ceramic sliding member 32 of invention
breaking toughness value (MPa·m1/2)
0
1
2
3
4
5
6
5
10
15
20
aspect ratio of ZnO·Al2O3 particles

FIG. 13

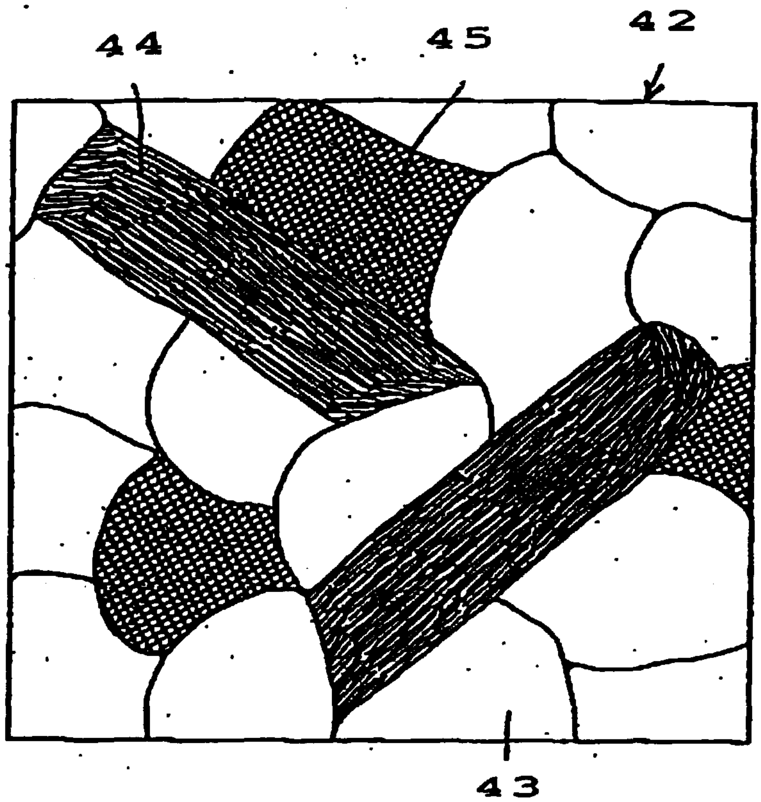
44
45
42
43

FIG. 14

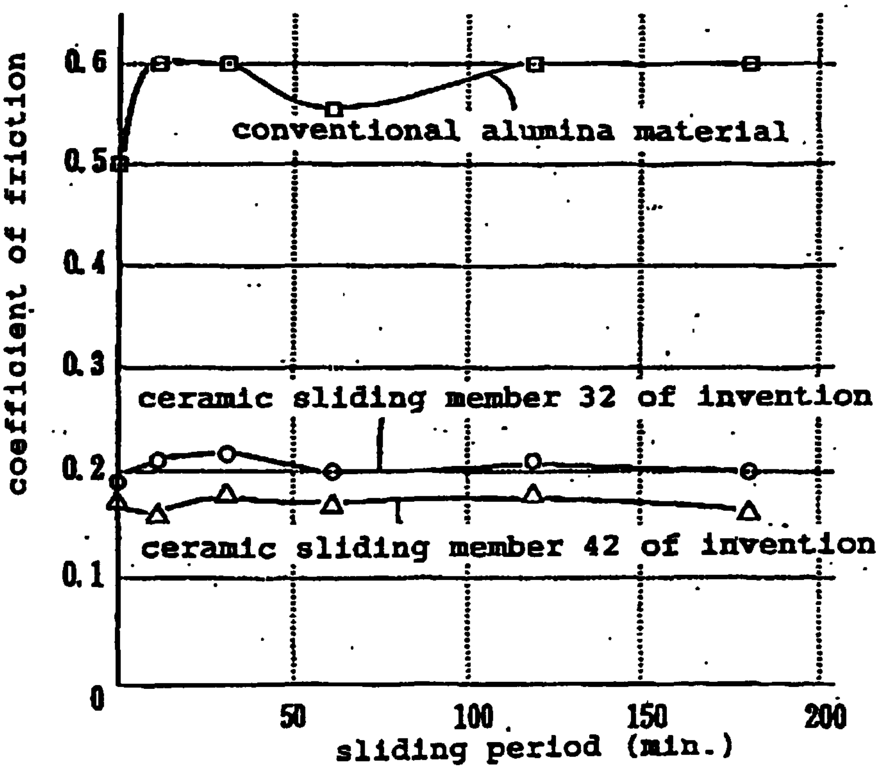
coefficient of friction
0.6
0.5
0.4
0.3
0.2
0.1
0
conventional alumina material
ceramic sliding member 32 of invention
ceramic sliding member 42 of invention
50
100
150
200
sliding period (min.)

FIG. 15

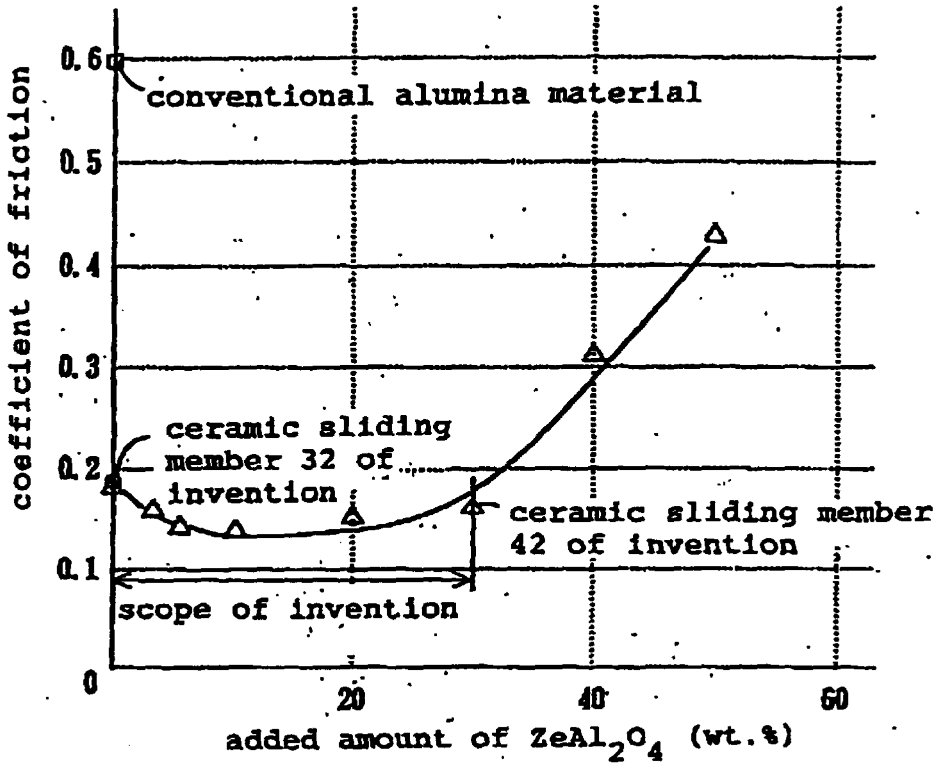
coefficient of friction
0.6
0.5
0.4
0.3
0.2
0.1
0
20
40
60
conventional alumina material
ceramic sliding member 32 of invention
ceramic sliding member 42 of invention
scope of invention
added amount of $ZeAl_2O_4$ (wt.%)

FIG. 16

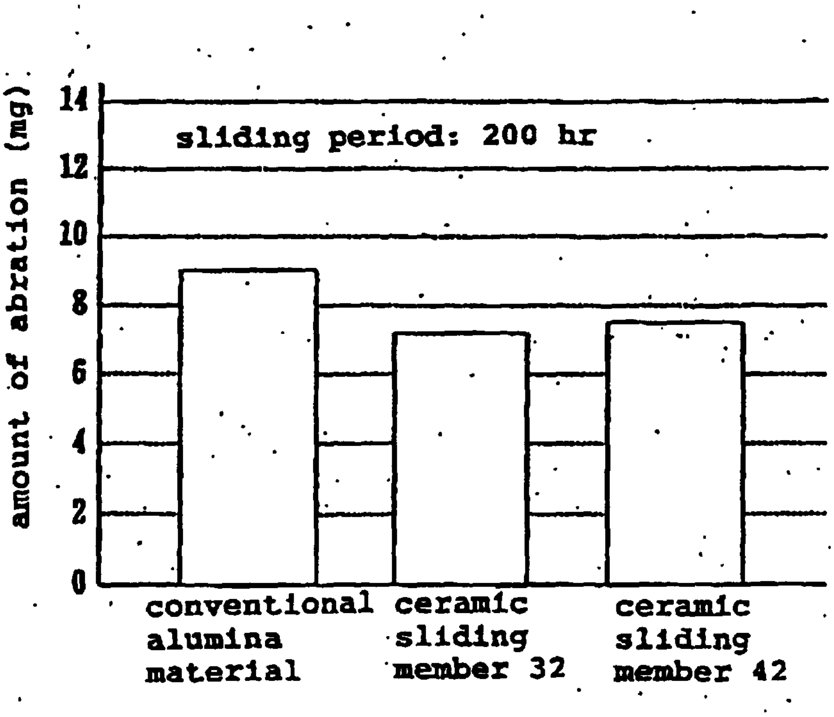
amount of abration (mg)
14
12
10
8
6
4
2
0
sliding period: 200 hr
conventional alumina material
ceramic sliding member 32
ceramic sliding member 42

FIG. 17

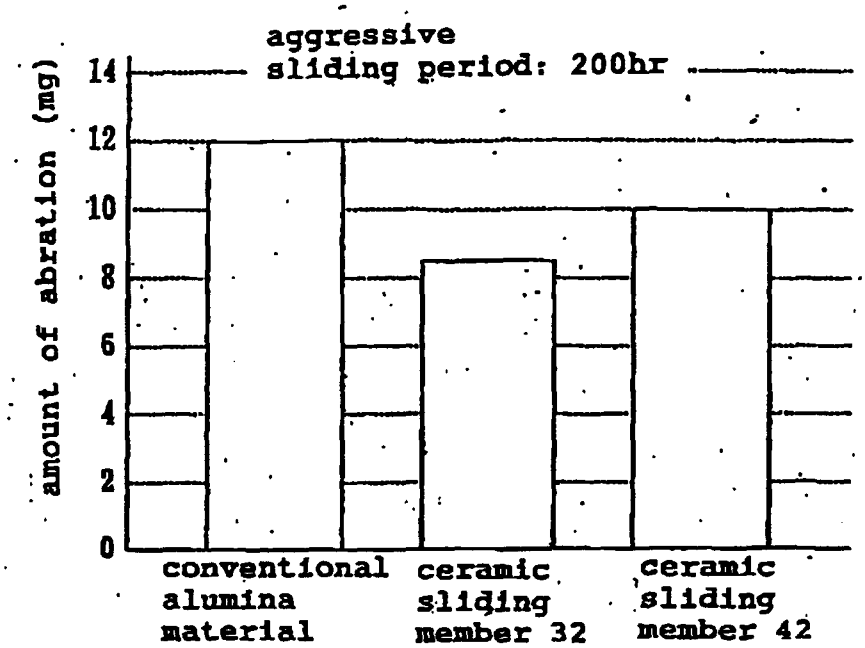
aggressive
sliding period: 200hr
amount of abration (mg)
14
12
10
8
6
4
2
0
conventional alumina material
ceramic sliding member 32
ceramic sliding member 42

European Patent Office

# EUROPEAN SEARCH REPORT

Application Number
EP 98 30 9819

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br><br><br><br><br><br><br><br><br><br><br><br>A | PATENT ABSTRACTS OF JAPAN<br>vol. 098, no. 010,<br>31 August 1998 (1998-08-31)<br>-& JP 10 120460 A (ISUZU CERAMICS KENKYUSHO:KK), 12 May 1998 (1998-05-12)<br>* abstract *<br>* tables *<br>* page 2, left-hand column; claim 4 *<br>-& DATABASE WPI<br>Section Ch, Week 9829<br>Derwent Publications Ltd., London, GB;<br>Class L02, AN 98-328296<br>XP002100992<br>* abstract *<br>--- | 1-3,7,8,<br>12-18<br><br><br><br><br><br><br><br><br><br><br><br><br>4,5,9-11 | C04B35/117<br>C04B35/80<br>C04B35/111<br>F16K25/00 |
| X<br><br><br><br><br><br>A | EP 0 732 310 A (DESMARQUEST CERAMIQUES TECH) 18 September 1996 (1996-09-18)<br>* claim 18 *<br>* page 1, line 3 - line 7 *<br>* page 2, line 12 - line 17 *<br>* example 4 *<br>--- | 1,2,17,<br>18<br><br><br><br><br>7,9-14,<br>16 | TECHNICAL FIELDS SEARCHED (Int.Cl.7)<br>C04B<br>F16K |
| X<br><br><br><br><br><br><br><br>A | DATABASE WPI<br>Section Ch, Week 9411<br>Derwent Publications Ltd., London, GB;<br>Class L02, AN 94-088875<br>XP002100995<br>& JP 06 039534 A (KAWASAKI ROZAI KK),<br>15 February 1994 (1994-02-15)<br>* abstract *<br>---<br>-/-- | 1-3,17,<br>18<br><br><br><br><br><br><br>7-14,16 | |

The present search report has been drawn up for all claims

| Place of search | Date of completion of the search | Examiner |
|---|---|---|
| THE HAGUE | 11 February 2000 | Rosenberger, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 98 30 9819

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | PATENT ABSTRACTS OF JAPAN vol. 1999, no. 03, 31 March 1999 (1999-03-31) & JP 10 338566 A (ISUZU CERAMICS KENKYUSHO:KK), 22 December 1998 (1998-12-22) * abstract * -& DATABASE WPI Section Ch, Week 199910 Derwent Publications Ltd., London, GB; Class L02, AN 1999-114752 XP002100993 * abstract * | 1-3,12, 16-18 | |
| A | | 4,5, 7-11,13, 14 | |
| E | PATENT ABSTRACTS OF JAPAN vol. 1999, no. 03, 31 March 1999 (1999-03-31) & JP 10 338567 A (ISUZU CERAMICS KENKYUSHO:KK), 22 December 1998 (1998-12-22) * abstract * -& DATABASE WPI Section Ch, Week 199910 Derwent Publications Ltd., London, GB; Class L02, AN 1999-114753 XP002100994 * abstract * | 1-3,7-9, 12,14, 16-18 | TECHNICAL FIELDS SEARCHED (Int.Cl.7) |
| A | | 4,5,10, 11,13 | |

-/--

The present search report has been drawn up for all claims

| Place of search | Date of completion of the search | Examiner |
|---|---|---|
| THE HAGUE | 11 February 2000 | Rosenberger, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 98 30 9819

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | PATENT ABSTRACTS OF JAPAN vol. 1999, no. 08, 30 June 1999 (1999-06-30) & JP 11 060329 A (ISUZU CERAMICS KENKYUSHO:KK), 2 March 1999 (1999-03-02) * abstract * -& DATABASE WPI Section Ch, Week 199919 Derwent Publications Ltd., London, GB; Class L02, AN 1999-225951 XP002129395 * abstract * | 1-6, 10-12, 14,16-18 | |
| A | | 7-9,13 | |
| A | GARCIA D E ET AL: "Microstructure development in in situ reinforced reaction-bonded aluminum niobate-based composites" JOURNAL OF THE AMERICAN CERAMIC SOCIETY, SEPT. 1996, AMERICAN CERAMIC SOC, USA, vol. 79, no. 9, pages 2266-2270, XP002129394 ISSN: 0002-7820 * abstract * * table I * * page 2268, paragraph III.2; figure 3 * | 1,2,4,6, 10,12,13 | TECHNICAL FIELDS SEARCHED (Int.Cl.7) |

The present search report has been drawn up for all claims

| Place of search | Date of completion of the search | Examiner |
|---|---|---|
| THE HAGUE | 11 February 2000 | Rosenberger, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number
EP 98 30 9819

## CLAIMS INCURRING FEES

The present European patent application comprised at the time of filing more than ten claims.

- [ ] Only part of the claims have been paid within the prescribed time limit. The present European search report has been drawn up for the first ten claims and for those claims for which claims fees have been paid, namely claim(s):

- [ ] No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

- [x] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

European Patent Office

**LACK OF UNITY OF INVENTION SHEET B**

Application Number
EP 98 30 9819

The Search Division considers that the present European patent application does not comply with the requirements of unity of invention and relates to several inventions or groups of inventions, namely:

1. Claims: 1-3 and in part 17,18

   The stated ceramic sliding member directed to uniform dispersion of composite oxide particles of an aluminate anhydride spinel type crystalline structure having a particle size similar to alpha-alumina in a population phase of alpha-alumina and use thereof.

2. Claims: 4-6 and in part 17,18

   The stated ceramic sliding member directed to uniform dispersion of needle-like and/or plate-like composite oxide particles containing zinc and aluminium as main components in a population phase of alpha-alumina and use thereof.

3. Claims: 7-9 and in part 16-18

   The stated ceramic sliding member directed to uniform dispersion of composite oxide particles containing zinc aluminate in a population phase of alpha-alumina and presence of at least one of compound particles of titanium and compound particles of iron in a grain boundary phase between the population phase and the composite oxide particles and use thereof.

4. Claims: 10,11,16-18

   The stated ceramic sliding member directed to uniform dispersion of needle-like and/or plate-like composite oxide particles containing zinc and aluminium as main components and composite oxide particles having a spinel type crystalline structure of zinc aluminate and use thereof.

5. Claims: 12-15 and in part 16-18

   The stated ceramic sliding member directed to uniform dispersion of a composite oxide of aluminium and niobium including aluminium niobate as a main component or a composite oxide of aluminium and zinc including zinc aluminate as a main component in a population phase of alumina and use thereof.

## ANNEX TO THE EUROPEAN SEARCH REPORT ON EUROPEAN PATENT APPLICATION NO. EP 98 30 9819

This annex lists the patent family members relating to the patent documents cited in the above-mentioned European search report. The members are as contained in the European Patent Office EDP file on
The European Patent Office is in no way liable for these particulars which are merely given for the purpose of information.

11-02-2000

| Patent document cited in search report | Publication date | Patent family member(s) | Publication date |
|---|---|---|---|
| JP 10120460 A | 12-05-1998 | NONE | |
| EP 0732310 A | 18-09-1996 | FR 2731700 A | 20-09-1996 |
| | | FR 2735768 A | 27-12-1996 |
| | | CN 1138565 A | 25-12-1996 |
| | | DE 69603104 D | 12-08-1999 |
| | | JP 8277160 A | 22-10-1996 |
| | | US 5652189 A | 29-07-1997 |
| | | US 5658838 A | 19-08-1997 |
| JP 6039534 A | 15-02-1994 | NONE | |
| JP 10338566 A | 22-12-1998 | NONE | |
| JP 10338567 A | 22-12-1998 | NONE | |
| JP 11060329 A | 02-03-1999 | NONE | |

EPO FORM P0459

For more details about this annex : see Official Journal of the European Patent Office, No. 12/82